(19)

**Europäisches Patentamt**

**European Patent Office**

**Office européen des brevets**

(11) **EP 2 933 518 A1**

(12) **EUROPEAN PATENT APPLICATION**

(43) Date of publication:
**21.10.2015 Bulletin 2015/43**

(51) Int Cl.:
**F16D 41/066** (2006.01)     **F16D 41/00** (2006.01)

(21) Application number: **15161727.1**

(22) Date of filing: **30.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **02.04.2014 IT TO20140275**

(71) Applicant: **Aktiebolaget SKF**
**415 50 Göteborg (SE)**

(72) Inventor: **Galfre, Stefano**
**I-10063 Perosa Argentina (TO) (IT)**

(74) Representative: **Tedeschini, Luca**
**SKF Industrie S.p.A.**
**Via Pinerolo, 44**
**10060 Airasca (TO) (IT)**

(54) **One-way bearing unit**

(57)     A one-way bearing unit (201) including a first ring and a second ring (202, 203) arranged coaxial to each other and coupling means (204) for making the first and the second ring relatively movable in a first direction (T1) of relative rotation and angularly integral to each other in a second direction (T2) of relative rotation opposite to the first; in which the coupling means include a plurality of first rolling bodies (205) rolling on a first track defined by an annular groove (206) of the first ring facing to the second ring, and a plurality of circumferential recesses (207) obtained on the second ring facing to the first track and having progressively smaller depth in the second direction of relative rotation, each recess being engaged by a first rolling body; and wherein the annular groove (206) defining the first track and the circumferential recesses (207) are obtained in an axial direction, each recess being delimited by a bottom wall (209) defined by a flat face of the recess arranged oblique with respect to the first track (206) and which faces to the first track in an axial direction.

FIG. 7

EP 2 933 518 A1

**Description**

Technical field of the invention

The present invention relates to a one-way bearing unit having a reduced activation load.

Known art

One-way bearing units, that is bearing units of different types incorporating one or more so-called one-way mechanisms, in which two coaxial rings are made integral in a direction of relative rotation of one of the rings and are made idle in an opposite direction, for example by means of suitable rolling bodies, are known in the state of the art.

For example, GB474042 illustrates a rolling or "antifriction" bearing which incorporates an intermediate ring, arranged between a radially outer ring and a radially inner ring of the bearing and provided with a pair of tangent recesses, each accommodating a first rolling body loaded by a spring and which acts on the outer ring and on the inner ring, respectively, of the bearing (see in particular figure 9 of said document). In order to reduce the friction on second rolling bodies of the bearing, different from the first rolling bodies and which allow the relative low-friction rotation of the inner and outer rings of the bearing, one of the annular rolling tracks for the second rolling bodies is transversely V-shaped.

This document does not provide the skilled in the art with any teachings for resolving a technical problem which is particularly felt in one-way bearing units, and that is the one of reducing the activation load of the one-way mechanism.

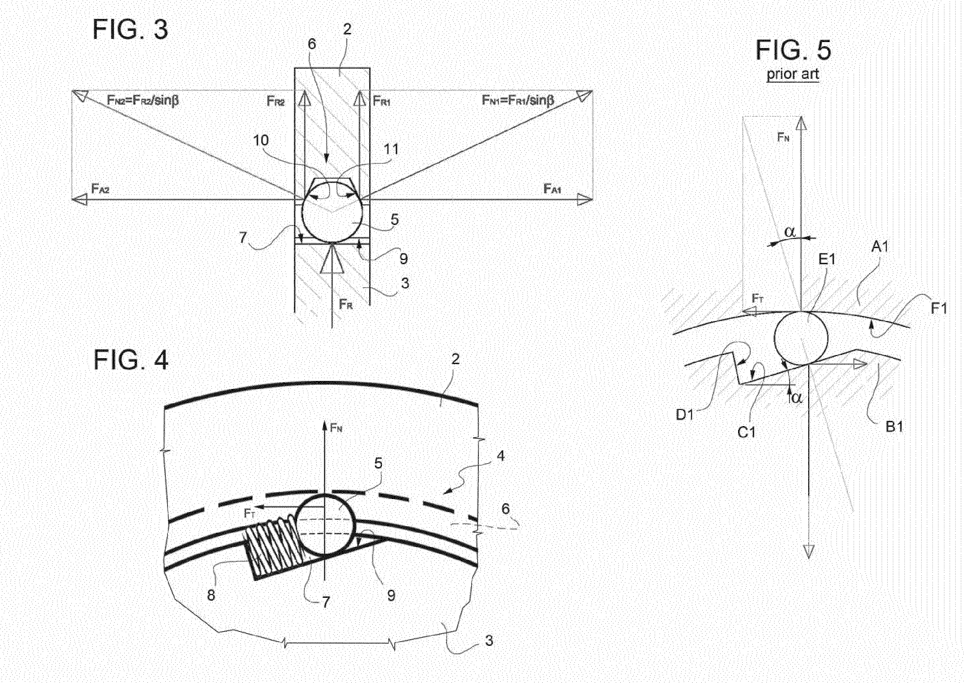

With reference to figure 5 of the drawings accompanying this description, indeed, in order to obtain the transmission of a torque in a known one-way mechanism, there is a need to generate a tangent force $F_T$ between an outer ring A1 and an inner ring B1 of the bearing unit by applying a radial stress $F_N$ which depends on the value of the angle $\alpha$ of inclination of an oblique face C1 of a recess D1 of the inner ring B1 in which a rolling body E1 is housed, which may be indifferently a ball or a roller and which acts as an angular blocking member. In turn, the value of angle $\alpha$ must be less than the value of the static angle of friction (approximately 9° for steel on steel lubricated contact) between face C1 and the rolling body E1, otherwise the latter slides, rather than operating like a wedge and making the rings A1 and B1 angularly integral. To obtain acceptable tangent forces of transmission it is therefore necessary to work with very small angles $\alpha$, which creates significant complications and high construction costs; furthermore, increased radial loads $F_N$ are to be accepted on the rolling body, with subsequent possible fast wear.

A further drawback of the one-way bearing units of the state of the art is that they are operated by radial insertion loads, while it would be preferable to have axial activation loads in certain cases.

FR327595 and DE102011081931 do not solve in a satisfactory manner such problems.

Summary of the invention

It is the object of the present invention to provide a one-way bearing unit which does not have the drawbacks of the known art and, in particular, which has a reduced activation load, increased duration and efficiency, is easy and affordable to embody and has reduced volumes.

It is also an object of the present invention to provide a one-way bearing unit which may be activated by means of axial activation load.

Therefore, based on the invention, a one-way bearing unit is provided having the features stated in the appended claims.

Brief description of the drawings

The present invention will now be described with reference to the accompanying drawings, which illustrate some non-limiting embodiments thereof, in which:

- figure 1 diagrammatically illustrates an elevated side view of a one-way bearing unit which exemplify the operating principle on which the invention is based, in the case of application to a rotation motion;
- figure 2 illustrates the one-way bearing unit in figure 1, in radial section according to the path plane II-II;
- figures 3 and 4 diagrammatically illustrate, on enlarged scale, respective details of figures 2 and 1, respectively;
- figure 5 diagrammatically illustrates a one-way bearing unit and its operating principle, according to the state of the art;
- figure 6 diagrammatically illustrates a one-way bearing unit which exemplify the operating principle on which the invention is based, in the case of application to an alternative rotation motion;
- figures 7 illustrates a one-way bearing unit according to the invention, in the case of application to a rotation motion;
- figure 8 illustrates a one-way bearing unit not comprised in the invention;
- figure 9 illustrates a perspective view, on enlarged scale and partly sectional, of the one-way bearing unit in figure 8 according to a possible variant not comprised in the invention; and
- figures 10, 11 and 12 illustrate - figure 10 diagrammatically - respective details of an element forming the one-way bearing unit in figure 7.

Detailed description

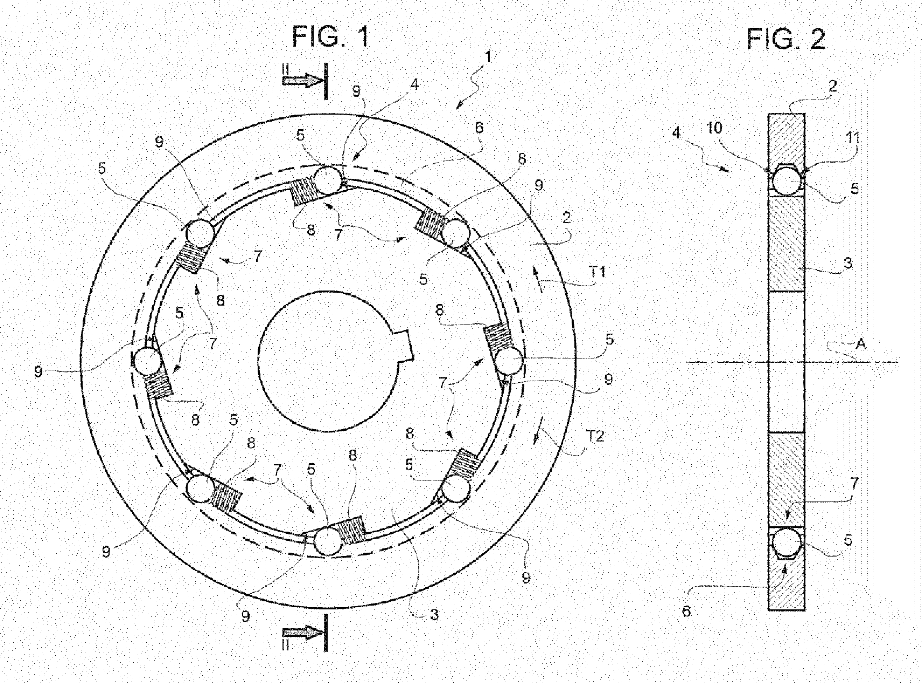

With reference to figure 1, numeral 1 indicates a one-way bearing unit comprising a first member 2 and a second member 3 arranged facing to each other and coupling means 4 between the first member 2 and the second member 3. The coupling means 4 are interposed between the first member 2 and the second member 3 so as to make the first member 2 relatively movable with respect to the second member 3, in a first direction T1 and to make the first member 2 integral with the second member 3 in a second direction T2 opposite to the first direction T1.

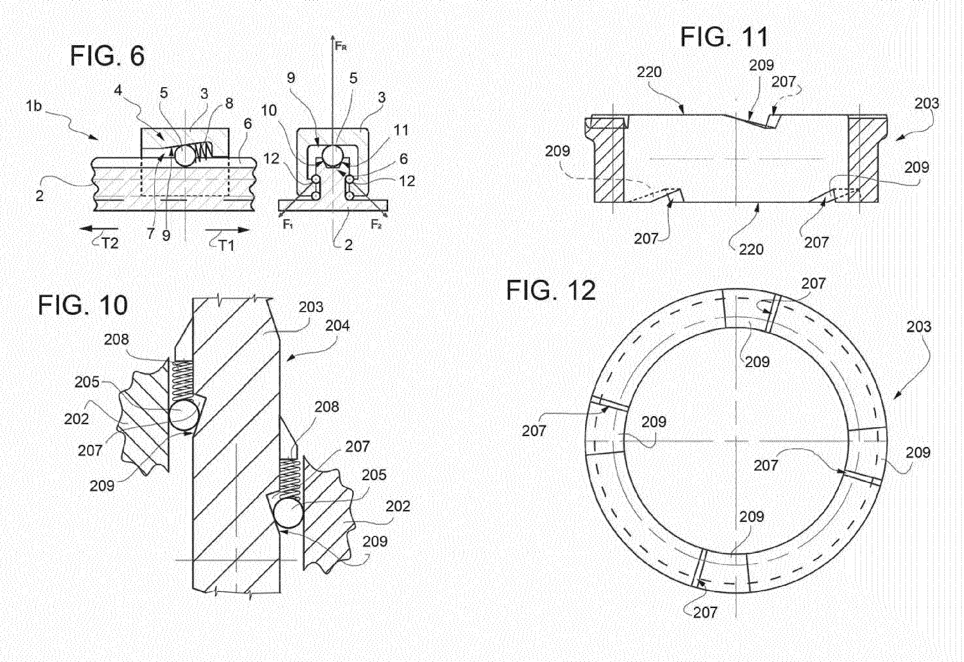

With reference also to figure 6, where details similar or equal to those described above are indicated with the same numerals for simplicity, a "one-way" bearing unit 1b is illustrated, formed by the same details 2, 3 and 4 described above. The only difference consists in the fact that while the members 2 and 3 in the case of unit 1 are two rings, respectively a radially outer ring 2 and a radially inner ring 3, and the directions T1 and T2 are directions of relative rotation of the outer ring 2 with respect to the inner ring 3, member 2 in the case of unit 1b is a sliding block or track and member 3 is a slide or guide, while the directions T1 and T2 are directions of relative linear sliding of member 2 with respect to member 3.

According to an arrangement known per se, in both embodiments 1 and 1b, the coupling means 4 comprise at least a first rolling body 5 which engages a first track 6 obtained on the first member 2 so as to face towards the second member 3, at least a second track 7 obtained on the second member 3, facing to the first track 6, and elastic means 8 for pushing the at least first rolling body 5 against the first track 6 and the at least second track 7; furthermore, the first track 6 and the at least second track 7 extend parallel to the first and second direction T1 and T2, and the at least second track is defined by/consists of at least one recess 7 accommodating at least partly the first rolling body 5 and delimited by a flat face 9 arranged oblique with respect to the first track 6.

As stated above, in the case of the bearing unit 1, the first and the second member consist of a first and a second ring 2 and 3 mounted coaxial to each other with the interposition of a plurality of first rolling bodies 5, which roll on the first track 6, which is defined by/consists of a radial annular groove of the first ring 2 facing towards, and overlooking, the second ring 3, which is provided with a plurality of second tracks 7, numbering at least one per each first rolling body 5 present, each of which consists of a recess 7 having a radially variable-depth in one of the first and second direction T1, T2 (in the case in point, of a radial depth which reduces progressively in direction T2 until being nullified); the plurality of radial recesses 7 extends circumferentially, each by a predetermined angular stretch of the second ring 3 and, consequently, as stated above, the first and the second direction T1 and T2 consist of opposite directions of relative rotation between the first ring 2 and the second ring 3 about a common axis of symmetry A (figure 2).

According to a first aspect of the invention the at least first rolling body 5 is a ball (that is a ball-shaped rolling body is selected from among all the possible rolling bodies) and the first track 6 is made so as to have, in a plane perpendicular to the first and second direction of movement T1 and T2, a cross-section shaped as a V-channel, which is delimited on opposite sides by opposite flat surfaces 10, 11 that depart from each other towards the second track, or towards the recess(es) 7 so that only two opposite contact points always exist between the at least first rolling body 5 and the first member 2, as diagrammatically illustrated in figure 3.

With reference to figures 3 and 4, they illustrate the operating principle of a one-way bearing unit made as described, compared with the operation of a one-way unit of the state of the art, similar to unit 1, but in which the rolling bodies E1 may be of any kind, for example, rollers, and in which the plurality of radial-circumferential recesses D1 faces to a first radially outer track of member A1 which consists of a flat surface F1.

In the bearing unit 1, the flat oblique face 9 of each recess 7 faces to the first track 6 in a radial direction, each variable-depth recess 7 being obtained circumferentially in a radial direction. Thereby, a force of activation of the one-way bearing unit 1, indicated in figure 4 as $F_N$, is always directed in radial direction, perpendicular to the axis of rotation A of the rings 2 and 3, and generates a tangent force $F_T$ that transmits the torque.

While in the one-way bearing unit of the state of the art (figure 5), the force generated $F_T$ being equal, force $F_N$ is very high in that it depends only on the value of angle $\alpha$, which must be small (for example 7-8° since it must be smaller than the angle of friction), the force $F_T$ generated in the rotating bearing unit 1 (as also in the linear bearing unit 1b) depends on the force normal (i.e. perpendicular) at the surface of reaction of track 6 (faces or surfaces 10, 11) which however, in this case, is not directed radially but is directed perpendicular to the oblique surfaces 10, 11 that depart from each other towards each track/recess 7, that is it depends on two opposite forces FN1 and FN2 which are equal to the forces FR1 and FR2 divided by the sine of the angle $\beta$, that is they depend on the inclination, with respect to axis A, selected for the surfaces 10, 11, inclination which may be selected freely because it does not depend on the angle of friction.

Accordingly, the following relation applies:

$$F_N \;=\; FR1 \;=\; FR2$$

Accordingly, there may be a very high normal force (which generates the tangent force $F_T$ that transmits the torque) while keeping the radial force $F_N$ relatively small and especially free from the angle of friction. Therefore, the force of activation of the one-way bearing unit 1 (as also the one of the linear unit 1b) is reduced with respect to the one required in the state of the art and, moreover, the value of the inclination of the oblique surface 9 may be made higher than the angle of friction without necessarily having slipping. The embodiment of the bearing units 1, 1b is consequently simpler, faster and more affordable.

As shown in figures 1-4, the elastic means 8 consist of a plurality of simple helical springs, each at least partly accommodated in each recess 7 delimited by the flat face 9 arranged oblique with respect to the first track 6, so as to cooperate directly with each respective rolling body or ball 5, and are restrained integral to the second member 3, that is to the radially inner ring 3 provided with the plurality of recesses 7 defining the plurality of second tracks 7.

In the one-way bearing unit 1 described, which is annular, all the forces in play generated by the conformation of the annular track 6 are balanced and the resultant is null. Instead in the linear unit 1b, the conformation of track 6 generates a force of reaction FR on the face or oblique surface 9 that is not balanced. Accordingly, the linear bearing unit 1b must also be provided with second rolling bodies 12 interposed between the members 2, 3 on both the opposite sides thereof, adapted to support the forces F1 and F2 that counterbalance thrust FR.

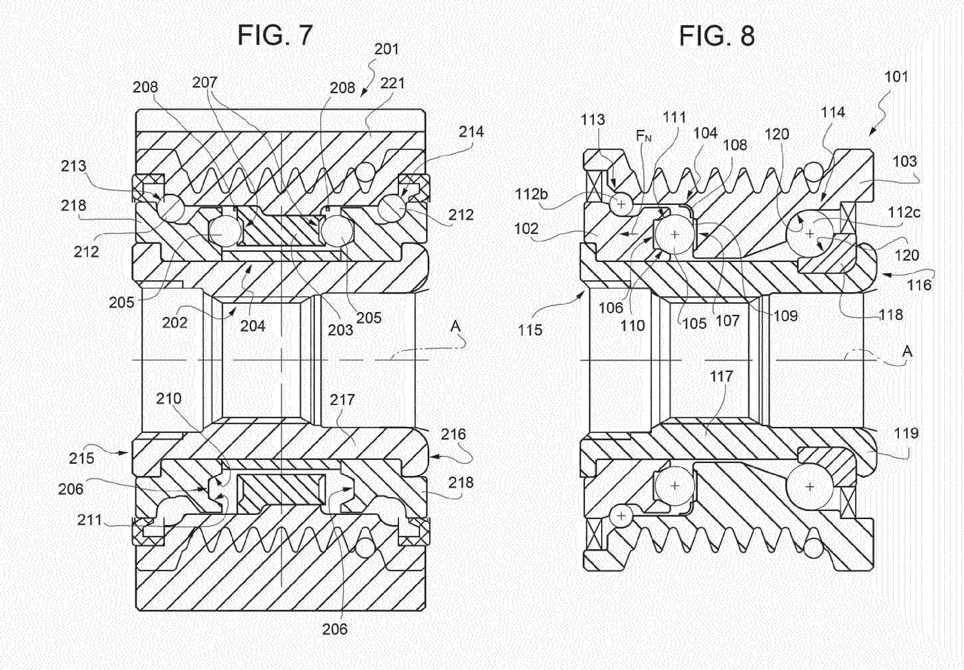

Now, with reference to figures 7 and from 10 to 12, they illustrate two different embodiments of a one-way bearing unit according to the invention, in which the rolling bodies of the one-way mechanism made according to what described herein above do not also wholly support the radial loads to which the bearing unit is subjected in use and in which the force of activation is no longer necessarily directed in radial direction.

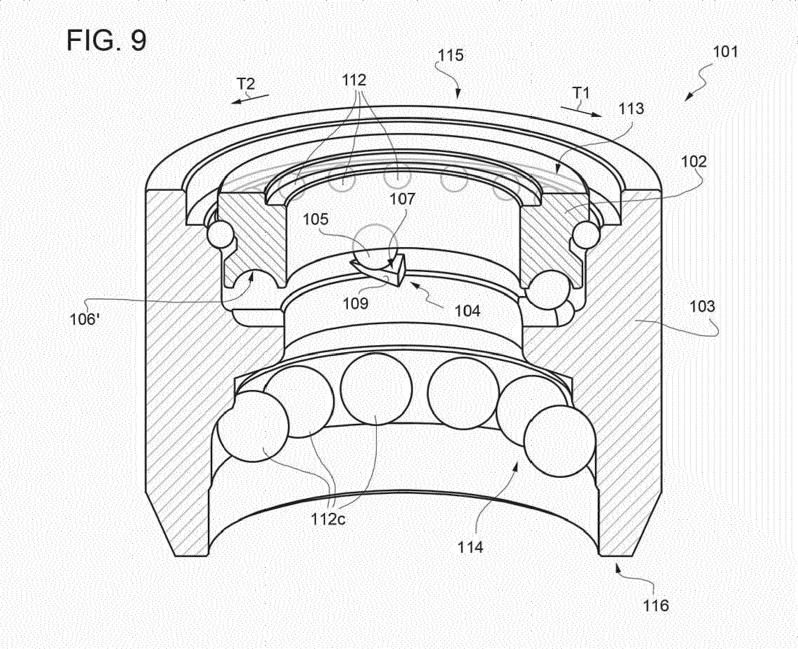

With reference to figures 8 and 9, they illustrate a one-way bearing unit 101 comprising a first ring 102 and a second ring 103 arranged coaxial to each other and relatively rotatable about a common axis of symmetry A, and coupling means 104 between the first and second ring 102, 103 to make the first and the second ring 102, 103 relatively movable between each other about axis A in a first direction of relative rotation T1 of the first ring 102 with respect to the second ring 103, and angularly integral to each other in a second direction of rotation T2 relative to the first ring 102 with respect to the second ring 103.

The coupling means 104 comprise a plurality of first rolling bodies 105 selected in such a manner to consist in balls, which roll on a first track 106 defined by an annular groove of the first ring 102 facing towards, and overlooking, the second ring 103; and a plurality of circumferential recesses 107 (see figure 9 in particular) obtained on the second ring 103, which face to the first track 106 and have progressively smaller depth in the second direction of relative rotation T2 of the first ring 102, each recess 107 being engaged by a respective first rolling body 105.

Both the annular groove 106 defining the first track of the first ring 102 and the circumferential recesses 107 of the second ring 103 are obtained in an axial direction, each recess 107 being delimited by a bottom wall defined by a flat face 109 of recess 107 arranged oblique with respect to the first track 106 and which faces to the first track 106 in an axial direction; thereby, a force of activation $F_N$ of the one-way bearing unit 101 is always directed in axial direction, that is parallel to the axis of relative rotation A of the rings 102, 103.

The rings 102, 103 are therefore mounted coaxial to each other with the interposition of the plurality of first rolling bodies 105 which roll on the first track, which is defined by an axial annular groove 106 (that is having depth measured parallel to axis A) of the first ring 102 facing towards, and overlooking, the second ring 103 and delimited laterally by opposite flat surfaces 110, 111 which depart from each other towards a plurality of second tracks defined by the recesses 107 present on ring 103, numbering at least one for each first rolling body 105; each second track or recess 107 consists of a variable-depth axial recess in one of the first and second direction T1, T2 (in the case in point, the depth of the recesses 107, measured in direction parallel to axis A and continuing in direction T2, progressively decreases until being nullified) and which extends circumferentially for a predetermined angular stretch of the second ring 103, the directions T1 and T2 consisting of opposite directions of relative rotation between the first ring 102 and the second ring 103 about the common axis of symmetry A. The axial annular groove 106 and the recesses 107 are facing to each other and arranged in the same radial position.

The non inventive variant illustrated in figure 9 is identical to the embodiment illustrated in figure 8, except that track 106 is substituted with a track 106' delimited by a curved surface (by a section of toroidal surface) rather than by the flat surfaces 110 and 111 which depart from each other.

In the embodiments in figures 8 and 9, the one-way bearing unit 101 comprises a radially outer ring defined by ring 103 and a radially inner ring defined at least partly by ring 102, which are coaxial to each other; a plurality of second rolling bodies 112 are also interposed between the radially inner ring 102 and the radially outer ring 103, in addition therefore to the rolling bodies 105, according to a first crown 113 of second rolling bodies 112b and a second crown 114 of second rolling bodies 112c. The crowns 113 and 114 of rolling bodies 112b and 112c are arranged close to first and second opposite axial ends 115 and 116, respectively, of the radially outer ring 103.

For construction purposes, the radially inner ring is not only defined by ring 102, but on the contrary is formed by a cylindrical bush or sleeve 117 radially on the outside of which are integrally carried, for example by interference driving, ring 102, which is then defined by an intermediate ring, and an insert ring 118, which is axially blocked on bush 117 by plastic deformation (upsetting) of an end 119 opposite to ring 102 and facing the same part of end 116.

The first rolling bodies 105 are therefore arranged between the first member defined by the first ring 102 which forms at least part of the radially inner ring and the second member defined by the second ring 103 which consists of the radially outer ring.

It is clear to the skilled in the art that unit 101 may in any case be made so that the rolling bodies 105 defined only by balls are arranged between a first ring 102 consisting of one of the radially inner and outer rings or of an intermediate ring, not illustrated in figure 8, arranged between the radially inner and radially outer rings and the second member 103 defined by the second ring and consisting of the other of the radially inner and radially outer rings or of the intermediate ring.

In any case, the plurality of the first rolling bodies 105 is arranged between the first crown 113 and the second crown 114 of second rolling bodies 112b,c, collected in a single crown of first rolling bodies 105, each accommodated at least partly in, and cooperating with, a respective variable-depth axial recess 107 of the second ring 103; and the second rolling bodies 112b of the first crown 113 of second rolling bodies are made smaller than the second rolling bodies 112c of the second crown 114 of second rolling bodies, which engage deep groove tracks 120 also adapted to support axial loads. In particular, the crowns 113 and 114 of rolling bodies are crowns of balls 112b, 112c, respectively, in oblique contact so that crown 114 of balls 112c is capable of supporting the reaction to the activation load $F_N$ which would otherwise not be balanced.

With reference now to the embodiment in figures 7 and 10 to 12 according to the invention, they show a one-way bearing unit 201 depicting an axially balanced variant of the bearing unit 101 and having an intermediate ring.

The one-way bearing unit 201 comprises a radially outer ring 221, a radially inner ring 202 which in the embodiment illustrated, forms the first ring described above in the bearing unit according to the invention, and an intermediate ring 203 arranged between the radially outer ring 221 and the radially inner ring 202; as disclosed, the intermediate ring 203 in the embodiment illustrated forms the second ring described above of the bearing unit according to the invention.

In particular, the radially inner ring 202 is defined by a bush 217 on which two insert rings 218 are radially driven on the outside at opposite ends 215, 216 of bush 217 defining the opposite ends of the radially inner ring 202.

Two crowns 213 and 214 of rolling bodies 212 - balls in the non-limiting embodiment illustrated - are inserted between the rings 202 and 221, substantially at the ends 215, 216, with oblique contact. In this case, the rolling bodies 212 of the two crowns of rolling bodies 213 and 121 have the same dimensions.

Instead, coupling means 204 are inserted between the two insert rings 218 of the radially inner ring 202 and the intermediate ring 203, consisting of a plurality of first rolling bodies 205 consisting of balls and collected in a first and a second crown of identical and symmetrical balls, arranged between the first and the second crown 213, 214 of second rolling bodies 212, each rolling body 205 being accommodated at least partly in, and cooperating with, a respective variable-depth axial recess 207 of the intermediate ring 203; the first and second crown of rolling bodies 205 are symmetrical and are arranged side-by-side and separated axially by the intermediate ring 203 which carries the recesses 207 obtained at its respective opposite end edges 220 (figure 11).

The intermediate ring 203 is also restrained angularly integral to the radially outer ring 221, being interference driven within the same, between the insert rings 218, to which it faces on opposite sides.

It is clear to the skilled in the art that unit 201 may in any case be made so that the rolling bodies 205 defined only by balls are arranged between a first member 202 consisting of one of the radially inner and outer rings or of an intermediate ring arranged between the radially inner and radially outer rings, and a second member 203 consisting of the other of the radially inner and outer rings or of the intermediate ring, which may in turn be restrained integral to one of the radially outer ring and radially inner ring, respectively.

Also in this case, each recess 207 is provided with a flat face 209 which constitutes the bottom wall thereof and which is arranged oblique with respect to a respective first track defined, for each end edge 220 of the intermediate ring 203, by an annular groove 206 obtained on the insert ring 218 facing to the relative edge 220, on the part facing to edge 220 itself.

The variable-depth recesses 207 are obtained circumferentially on the edges 220, on opposite sides, so that the respective flat faces or bottom walls 209 face to the opposite tracks or grooves 206 in an axial direction and arranged in the same radial position, so that a force of activation of the one-way bearing unit 201 is always directed in axial direction, parallel to the axis A of relative rotation of the rings 203, 202 and 221.

In both unit 201 and in unit 101, when provided with an intermediate ring like ring 203 according to an aspect of the invention, the balls 205 and 105cooperate respectively with elastic means 208 and 108, respectively, which in figure 10 are only diagrammatically illustrated as simple helical springs, and which consist of specific elastically deformable cages 208 and 108, respectively, carried integral by the member provided with the recesses 207, 107 in the embodiments illustrated in figures 7 and 8.

Furthermore, the radially outer ring 221, 103 both in unit 201 and in unit 101 may be made in a pulley shape, as shown (not exhaustively) in figures 7 and 8.

Finally, the opposite tracks 206 in unit 201 are made according to the invention, therefore they have, in a plane containing axis A and therefore perpendicular to the directions of rotation T1 and T2, a cross-section shaped as a V-channel and delimited by opposite flat lateral surfaces 210, 211. It has been verified that in order to have a good effectiveness the angle formed between the surfaces 210 e 211 is to be lower than 30°.

## Claims

1. A one-way bearing unit (101; 201) comprising a first ring and a second ring (102, 103; 202, 203) arranged coaxial to each other, and coupling means (104; 204) between the first and second ring to make the first and the second ring relatively movable between each other in a first direction of relative rotation (T1) of the first ring with respect to the second and angularly integral to each other in a second direction of relative rotation (T2) of the first ring with respect to the second; wherein the coupling means comprise a plurality of first rolling bodies (105; 205) which roll on a first track defined by an annular groove (106, 206) of the first ring facing towards, and overlooking, the second ring; and a plurality of circumferential recesses (107; 207) obtained on the second ring, which overlook the first track and have progressively smaller depth in the second direction of relative rotation of the first ring, each recess being engaged by a respective first rolling body; wherein the annular groove (106; 206) defining the first track of the first ring and the circumferential recesses (107; 207) of the second ring are obtained in an axial direction, each recess being delimited by a bottom wall (109; 209) defined by a flat face of the recess arranged oblique with respect to the first track (106; 206) and which is facing to the first track in an axial direction, so that a force of activation of the one-way bearing unit is always directed in axial direction, which is parallel to the axis of rotation of the rings; **characterized in that**:

> i)- the first and second ring consist either in a radially outer ring (103; 221) and a radially inner ring (102; 202), which are coaxial to each other or vice versa, respectively;
> ii)- the one-way bearing unit further comprises an intermediate ring (203) arranged between the radially outer ring (221) and the radially inner ring (202);
> iii)- a plurality of the first rolling bodies (105; 205) are arranged between a first member defined by one of the radially inner and outer rings or by the intermediate ring (203) arranged between the radially inner and radially outer rings and a second member defined by the other of the radially inner and outer rings or by the intermediate ring.

2. A one-way bearing unit according to claim 1, **characterized in that** the coupling means further comprise elastic means (108;208) for pushing the first rolling bodies against the first track of the first ring and the circumferential recesses (107;207) of the second ring; the elastic means (108;208) being at least partly accommodated in the recesses, so as to cooperate directly with the first rolling bodies (105; 205), and are restrained integral to the second ring (103; 203) which is provided with the circumferential recesses.

3. A one-way bearing unit according to claim 1 or 2, **characterized in that** the first and the second ring (102, 103; 202, 203) are mounted coaxial to each other with the interposition of a plurality of first rolling bodies (5; 105; 205) which roll in the first track, which is defined by an axial annular groove (106; 206) of the first ring facing towards, and overlooking, the second ring and is delimited laterally by the opposite flat surfaces (110, 111; 210, 211) which depart from each other towards the recesses; the second ring being provided with a plurality of second tracks, numbering at least one for each first rolling body, each of which consists of one said axial variable-depth recess (107; 207) in one of the first and second direction and which extends circumferentially for a predetermined angular stretch of the second ring; the first and the second direction (T1, T2) consisting of opposite directions of relative rotation between the first and second ring about a common axis of symmetry (A).

4. A one-way bearing unit according to any one of the preceding claims, **characterized in that** it comprises further the radially outer ring (103; 221) and the radially inner ring (102; 202), which are coaxial to each other, a plurality of second rolling bodies (112; 212) interposed between the radially inner ring and the radially outer ring according to a first (113; 213) and a second (114; 214) crown of second rolling bodies arranged close to first and second opposite axial ends (115, 116; 215, 216), respectively, of the radially inner ring.

5. A one-way bearing unit according to claim 4, **characterized in that** the plurality of the first rolling bodies (105) is arranged between the first and the second crown (113, 114) of second rolling bodies (112), is collected in a single crown of first rolling bodies, each accommodated at least partly in, and cooperating with, a respective variable-depth axial recess (107) of the second ring; the second rolling bodies (112b) of the first crown of second rolling bodies being smaller than the second rolling bodies (112c) of the second crown of second rolling bodies.

6. A one-way bearing unit according to claim 4, **characterized in that** it comprises an intermediate ring (203) arranged between the radially outer ring (221) and the radially inner ring (202), the plurality of the first rolling bodies (205) being arranged between the first and the second crown of second rolling bodies (212), is collected in a first and a second crown of first rolling bodies (205), each accommodated at least partly in, and cooperating with, a respective variable-depth axial recess (207) of the second ring; the first and second crown of the first rolling bodies (205) being arranged side-by-side and separated axially by the intermediate ring (203); the first rolling bodies (205) of the first crown of first rolling bodies being identical to the first rolling bodies (205) of the second crown of first rolling bodies; and the second rolling bodies (212) of the first crown (213) of second rolling bodies being identical to the second rolling bodies (212) of the second crown (214) of second rolling bodies.

**7.** A one-way bearing unit according to claim 6, **characterized in that** the intermediate ring (203) is restrained angularly integral to one of the radially outer ring (221) and radially inner ring, respectively.

**8.** A one-way bearing unit according to one of the claims from 4 to 7, **characterized in that** the radially outer ring (103; 221) is made in a pulley shape.

FIG. 2

FIG. 1

FIG. 3

$F_{N2}=F_{R2}/\sin\beta$     $F_{R2}$     $F_{R1}$     $F_{N1}=F_{R1}/\sin\beta$

$F_{A2}$     $F_{A1}$

6
2
10
11
7
5
9
3

$F_R$

FIG. 4

2
5
4
$F_N$
$F_T$
6
8
7
9
3

FIG. 5

$F_N$

α

E1

A1

$F_T$

F1

D1

C1

α

B1

EP 2 933 518 A1

FIG. 6

FIG. 11

FIG. 10

FIG. 12

EP 2 933 518 A1

FIG. 7

FIG. 8

EP 2 933 518 A1

FIG. 9

**EP 2 933 518 A1**

Europäisches Patentamt
European Patent Office
Office européen des brevets

## EUROPEAN SEARCH REPORT

Application Number

EP 15 16 1727

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2006 038201 A1 (SCHAEFFLER KG [DE]) 21 February 2008 (2008-02-21) * the whole document * | 1,2,4 | INV. F16D41/066 F16D41/00 |
| Y | | 3,5,8 | |
| A | | 6,7 | |
| Y | US 2002/050431 A1 (MURATA NAKATO [JP] ET AL) 2 May 2002 (2002-05-02) * figures 1-4 * | 3,5,8 | |
| Y,D | FR 327 595 A (FONTANILLE EUGENE MATHIEU [FR]) 27 June 1903 (1903-06-27) * the whole document * | 3 | |
| X | FR 1 454 032 A (DIETRICH & CIE DE) 22 July 1966 (1966-07-22) * the whole document * | 1,4 | |
| A,D | DE 10 2011 081931 A1 (SCHAEFFLER TECHNOLOGIES AG [DE]) 7 March 2013 (2013-03-07) * the whole document * | 1 | |
| A | US 4 148 383 A (NAKANO TAKAZI) 10 April 1979 (1979-04-10) * the whole document * | 1 | TECHNICAL FIELDS SEARCHED (IPC) F16D |

The present search report has been drawn up for all claims

| Place of search | Date of completion of the search | Examiner |
|---|---|---|
| The Hague | 14 September 2015 | Van Overbeeke, Sim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**ANNEX TO THE EUROPEAN SEARCH REPORT**

**ON EUROPEAN PATENT APPLICATION NO.**                    EP 15 16 1727

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2015

| Patent document<br>cited in search report | Publication<br>date | Patent family<br>member(s) | | Publication<br>date |
|---|---|---|---|---|
| DE 102006038201 A1 | 21-02-2008 | NONE | | |
| US 2002050431 A1 | 02-05-2002 | CA | 2360967 A1 | 01-05-2002 |
| | | DE | 10152909 A1 | 11-07-2002 |
| | | JP | 2002139132 A | 17-05-2002 |
| | | US | 2002050431 A1 | 02-05-2002 |
| FR 327595 A | 27-06-1903 | NONE | | |
| FR 1454032 A | 22-07-1966 | DE | 1295291 B | 14-05-1969 |
| | | FR | 1454032 A | 22-07-1966 |
| DE 102011081931 A1 | 07-03-2013 | NONE | | |
| US 4148383 A | 10-04-1979 | BE | 861149 A1 | 16-03-1978 |
| | | DE | 2743310 A1 | 01-06-1978 |
| | | FR | 2372349 A1 | 23-06-1978 |
| | | GB | 1559757 A | 23-01-1980 |
| | | JP | S5375664 U | 23-06-1978 |
| | | NL | 7710772 A | 31-05-1978 |
| | | US | 4148383 A | 10-04-1979 |

EPO FORM P0459

For more details about this annex : see Official Journal of the European Patent Office, No. 12/82

**EP 2 933 518 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 474042 A
- FR 327595
- DE 102011081931